# EUROPEAN PATENT APPLICATION

(11) **EP 4 354 896 A1**
(43) Date of publication of application: **17.04.2024**
(21) Application number: 23201802.8
(22) Date of filing: 05.10.2023
(51) Int. Cl.: H04R 1/02, H04R 1/28

(54) **LOUDSPEAKER MOUNTING**

(30) Priority: 13.10.2022 GB 202215110
(71) Applicant: Nissan Motor Manufacturing (UK) Limited, Cranfield, Bedfordshire MK43 0DB (GB)
(72) Inventor: BLACK, Christian, Cranfield, MK430DB (GB)

(57) **Abstract**

A vehicle loudspeaker 2 is mounted to a mounting surface 3 such as a wheel arch or floor panel. Loudspeaker 2 comprises casing 20 and air duct 30, with a flange 40 located around air duct outlet end 32. A clamp 10 comprising a body 13, legs 12, and feet 11 is fitted to mounting surface 3. Back flange portion 41 is positioned under clamp body 13 in use. Clamp 10 then retains flange 40 on mounting surface 3, avoiding the need for tool access to flange portion 41. Additional flange fixing means 19 may be provided. A gasket 45 may be provided between flange 40 and mounting 3. A top mounting (28, Fig. 3a) may be provided on top of the speaker housing 20. A side mounting (38, Fig. 2a; or 37, Fig. 3a) may be provided on the air duct.

## Description

### Technical Field of the Invention

The present invention relates to mounting arrangements for loudspeakers; and in particular to mounting arrangements for vehicle loudspeakers.

### Background to the Invention

Loudspeakers for use in vehicle audio systems are commonly provided between the exterior structure of the vehicle and its interior panels. In such cases the interior panel may have an aperture, grille, or an array of apertures aligned with the loudspeaker mounting location. In this manner, the loudspeaker may be protected by the interior panel without undue impact on sound quality.

A loudspeaker typically comprises a diaphragm fitted within a casing. The diaphragm is driven by a driving coil so as to vibrate. These vibrations create sound waves travelling through the air in front of the diaphragm. Vibration of the diaphragm will also produce waves travelling away from the back of the diaphragm. In certain circumstances, these waves can reflect within the casing; and can interfere with subsequent vibration of the diaphragm, negatively impacting sound quality. To address this issue, some loudspeakers comprise an air duct in the casing which provides fluid connection between the back of the diaphragm and a relatively large open space, compared to the loudspeaker casing.

Since space within a vehicle is limited, it known to mount loudspeakers with an air duct on a mounting structure with an aperture connecting to a relatively large space. Examples of such mounting structures may include vehicle exterior structures such as a wheel arch, floor panel, door panel, C or D pillar; or interior structures dividing the passenger compartment from a luggage space or the like. Such mounting is readily achieved by providing a flange around the base of the air duct through which a number of bolts can fix the flange to the mounting structure. When the loudspeaker is mounted in a relatively small space - such as, behind an interior panel - it can be difficult to access the bolts to enable secure mounting and/or removal of the loudspeaker as required.

It is therefore an object of the present invention to provide a mounting arrangement for a loudspeaker that at least partially overcomes or alleviates these issues.

### Summary of the Invention

According to a first aspect of the present invention there is provided a mounting arrangement for mounting a loudspeaker to a mounting surface wherein the loudspeaker is of the type comprising a casing and an air duct extending from the casing to an outlet end, and wherein a flange is provided around the outlet end of the air duct; wherein the mounting arrangement comprises a clamp projecting from the mounting surface, the clamp being adapted to receive an edge portion of the flange and to retain it in position relative to the mounting surface; characterized in that: the clamp is attached to the mounting surface via one or more feet; and in that: the clamp comprises a leg projecting from each foot.

The clamp enables an edge portion of the flange to be readily and securely retained in position without the use of fixing means (such as bolts) which need manual adjustment. This can help to ensure secure mounting of such a loudspeaker in relatively small spaces with restricted access.

Each clamp foot may be secured in position by any suitable fixing means. Examples of suitable fixing means include but are not limited to welding; adhesive bonding; or bolts, screws, rivets, or the like.

The clamp comprises a leg projecting from each foot. At an opposing end to the foot, each leg may be connected to a body of the clamp. The body may extend substantially parallel to the mounting surface.

In one embodiment, the clamp comprises two feet. In such embodiments, the body may extend between the feet. In other embodiments, the clamp may have a single foot.

In some embodiments, the mounting arrangement may be provided with additional flange fixing means. The use of such flange fixing means can retain the loudspeaker in position more securely than by the clamp alone. The flange fixing means may be provided on a different portion of the flange than that retained by the clamp. In particular embodiments, the flange fixing means may be provided on a portion of the flange disposed on the opposing side of the air duct to the edge portion of the flange retained by the clamp. This allows the flange fixing means to secure a portion of the flange that is more readily accessed; and allows the clamp to secure an edge portion of the flange that might be less readily accessed.

In some embodiments, the flange fixing means may comprise bolts, screws, rivets or the like. In such embodiments, the flange may comprise one or more bores adapted to receive the flange fixing means. In such embodiments, the mounting surface may additionally comprise one or more corresponding bores. Each bore may be threaded or unthreaded, as required or desired.

In some embodiments, the mounting arrangement may comprise two or more clamps. In some such embodiments, each clamp may be adapted to receive the edge portion of the flange; and to retain it in position relative to the mounting surface. In other such embodiments, each clamp may be operable to receive different edge portions of the flange; and to retain each portion in position relative to the mounting surface.

In some embodiments, the retained edge portion of the flange may be a back portion of the flange. In still further such embodiments, one or more clamp may be adapted to each receive the back portion of the flange; or a side of the back portion of the flange; and to retain it in position relative to the mounting surface, whilst one or more additional clamps may be adapted to each receive the front portion of the flange, or a side of the front portion of the flange; and to retain it in position relative to the mounting surface.

The outlet end of the air duct may comprise an air outlet. The flange may be provided around the air outlet. In some embodiments, the flange has a substantially similar extent in all directions. In other embodiments, the back portion of the flange extends further than other portions of the flange. In some such embodiments, the front portion of the flange may extend less far than other portions of the flange. In some such embodiments, side portions of the flange may extend further than the front portion but less far than the back portion. In one such embodiment, the flange may have a substantially rectangular outer edge.

The mounting surface may comprise an aperture. The aperture may correspond in shape to the outlet. Each clamp may be provided substantially adjacent to the aperture; or be displaced from the aperture as required to receive and retain the corresponding flange portion. For instance, if the mounting arrangement has a single clamp, it may be displaced from the aperture in the direction where the retained edge portion of the flange would be positioned when the loudspeaker is mounted to the mounting surface and the outlet is aligned with the aperture.

A gasket may be provided between the flange and the mounting surface. The gasket can prevent the ingress of moisture or other contaminants between the flange and the mounting surface. The gasket may comprise resiliently deformable material. The gasket may have the form of an annular sheet. In such embodiments, the outer edge of the annular sheet may have a shape corresponding to the flange; and the inner edge of the annular sheet may have a shape corresponding to the outlet, or to the aperture.

In some embodiments, the or each clamp may be adapted to grip the flange. This may be achieved by the provision of a suitable coating; or of suitable formations on a face of the clamp body facing the mounting surface. Additionally or alternatively, it may be facilitated by selection of the leg dimensions to correspond to the flange thickness; or to the flange thickness and gasket thickness, as is appropriate.

The loudspeaker may comprise one or more diaphragms fitted within the casing. The air duct may be in fluid communication with a back surface of each diaphragm. Each diaphragm may be driven by a driving coil. In some embodiments, a grille may be attached to the casing over a front surface of each diaphragm. The grille thereby provides a sound permeable protective cover over the diaphragm.

The loudspeaker may be a vehicle loudspeaker. The mounting surface may be a vehicle structure. The vehicle structure may be a vehicle exterior structure. Examples of suitable vehicle exterior structures include but are not limited to wheel arches, floor panels and the like.

In some embodiments, the loudspeaker may be provided with one or more fixing tabs projecting from the casing. In some embodiments, the or each fixing tab may project from a different side of the casing to the air duct. One or more of such tabs may project from an opposing side of the casing to the air duct. In one such embodiment, there is a single fixing tab projecting from an opposing side of the casing to the air duct.

In some embodiments, each fixing tab may project from the air duct. In such embodiments, the fixing tabs may be provided on the exterior of the air duct so as not to provide a leak passage from the interior of the air duct.

In further embodiments, one or more fixing tabs may project from a different side of the casing to the air duct and/or one or more fixing tabs may project from the air duct.

In some embodiments, some or all of the fixing tabs may comprise a clip. In some embodiments, some or all of the fixing tabs may comprise a mounting bore for a tab fixing means. The tab fixing means may be adapted to attach to a further mounting surface. Examples of suitable tab fixing means include but are not limited to bolts, screws, rivets or the like. In some such embodiments, the mounting bore may be threaded or unthreaded, as required or desired.

The provision of one or more additional fixing tabs increases the security of mounting of the loudspeaker. This is particularly beneficial in situations where access to flange fixing means is restricted.

According to a second aspect of the present invention there is provided a vehicle comprising one or more loudspeakers mounted within the vehicle by mounting arrangements according to the first aspect of the present invention.

The vehicle of the second aspect of the present invention may incorporate any or all features of the previous aspect of the present invention as required or as desired.

### Detailed Description of the Invention

In order that the invention may be more clearly understood, one or more embodiments thereof will now be described, by way of example only, with reference to the accompanying drawings, of which:
- Figure 1: shows a loudspeaker according to the prior art;
- Figure 2a: shows a front view of a first embodiment of a loudspeaker mounting arrangement according to the present invention;
- Figure 2b: shows a back view of the loudspeaker mounting arrangement of Figure 2a;
- Figure 2c: shows a view of a mounting surface to which the loudspeaker in Figures 2a and 2b is mounted;
- Figure 3a: shows a front view of another embodiment of a loudspeaker mounting arrangement according to a first aspect of the present invention; and
- Figure 3b: shows a back view of the loudspeaker mounting arrangement of Figure 3a.

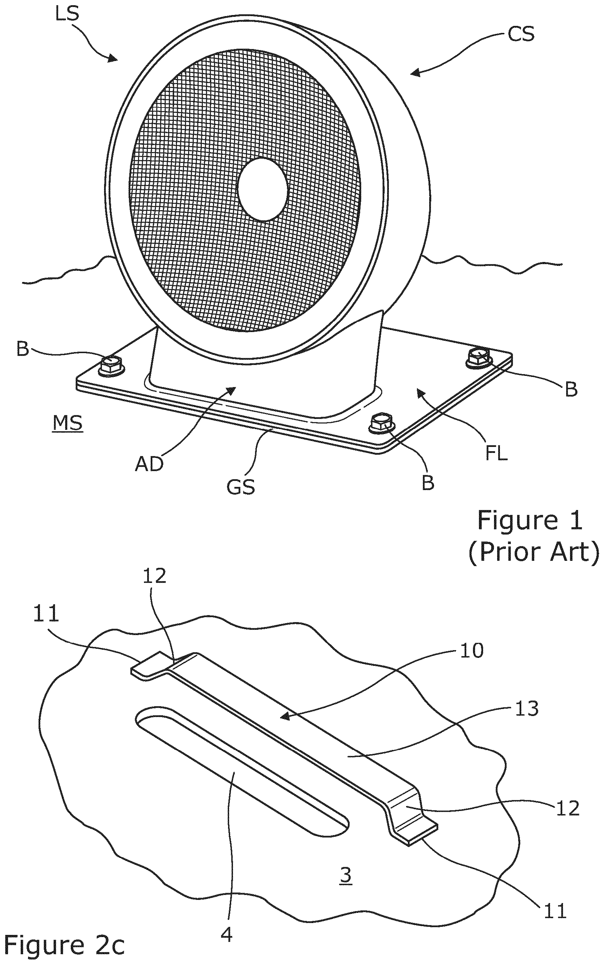

Turning to Figure 1, a loudspeaker LS according to the prior art is illustrated. The loudspeaker LS is a vehicle loudspeaker and is mounted to a mounting surface MS, such as a vehicle wheel arch or floor panel, the mounting surface MS comprising an aperture (not shown).

The loudspeaker LS is provided with a casing CS into which is fitted a diaphragm driven by a driving coil (not shown) so as to cause the diaphragm to vibrate; and thereby to emit sound waves. Extending from the casing CS is an air duct AD, in fluid communication with the air space between the diaphragm and the back of the casing CS. The air duct AD runs from the casing to an outlet, with a flange FL provided around the outlet.

To mount the loudspeaker LS on the mounting surface MS, the flange FL is positioned over mounting surface MS so that the outlet of air duct AD is aligned with the aperture. Optionally, a gasket GS can be provided between the flange FL and mounting surface MS. Bolts B are driven though bores provided in the flange FL, gasket GS and mounting surface MS as required to secure the loudspeaker LS in position. In some circumstances, it can be difficult to access some of the bolts B when the loudspeaker LS is orientated within a door panel such that the diaphragm is facing into the vehicle interior.

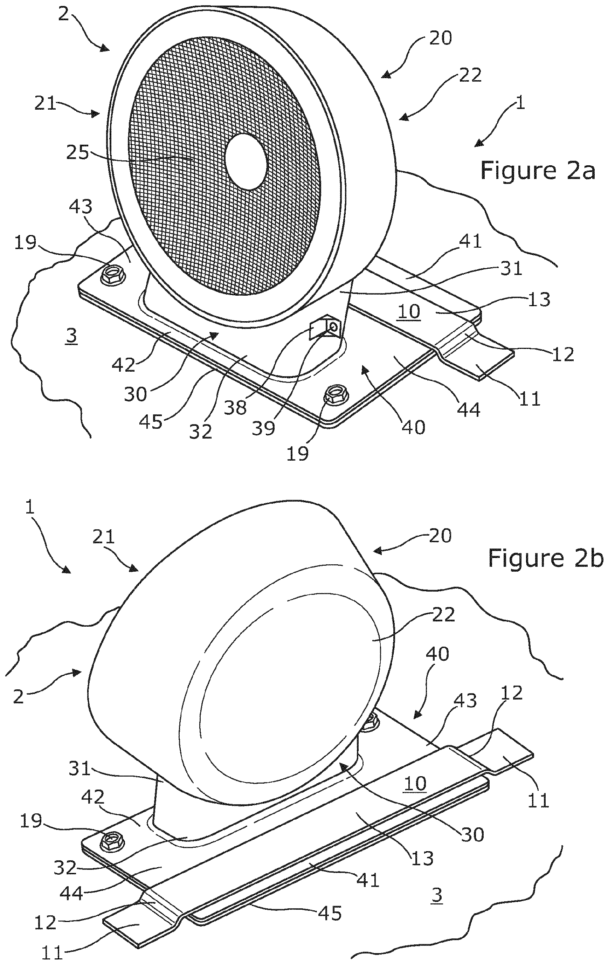

Turning now to Figures 2a-2c, a first embodiment of a mounting arrangement 1 according to the present invention for mounting a loudspeaker 2 to a mounting surface 3 is shown.

The loudspeaker 2 is provided with a casing 20 comprising a front face 21 into which is fitted a diaphragm 25. The diaphragm 25 is driven by a driving coil (not shown) so as to cause the diaphragm 25 to vibrate; and thereby to emit sound waves forward of the front 21 of casing 20. The back 22 of casing 20 is enclosed to protect the diaphragm 25 and driving coil.

The loudspeaker 2 is typically a vehicle loudspeaker; while the mounting surface 3 is typically a vehicle wheel arch, floor panel, door panel, or a C or D pillar. Often such loudspeakers 2 are mounted on a mounting surface 3 such that there is better access to the loudspeaker 2 and mounting arrangement 1 from the front 21 of the casing than from the back 22. This is due to the need to have the diaphragm 25 facing into an interior space of the vehicle, such as the passenger compartment; whilst the back 22 of the casing faces an exterior panel.

Extending from the casing 20 is an air duct 30, in fluid communication with the air space between the diaphragm 25 and the back 22 of the casing 20. The duct runs from a casing inlet end 31 to an outlet end 32, which comprises an outlet enabling air (and sound waves) to escape from the inside of the casing 20. As shown in the present example the air duct 30 has a cross-sectional profile of a rectangle with rounded ends. The skilled person will however appreciate that alternative cross-sectional profiles are possible.

A flange 40 is provided around the outlet end 32. As shown in Figure 2, the flange has a substantially rectangular form, although the skilled person will appreciate that alternative forms are possible. In the example shown, the flange 40 has a relatively wide back portion 41, a relatively narrow front portion 42, and intermediate width side portions 43, 44; relative to the position of the air duct 30. In the example shown in the drawings, a gasket 45 is provided between the flange 40 and the mounting surface 3. The gasket 45 comprises an annular sheet of elastomeric material having an outer shape to match the flange shape, and an inner shape to match the shape of the outlet end 32.

The mounting arrangement 1 comprises a clamp 10 fitted to mounting surface 3 and adapted to receive and retain an edge portion of the flange 40, in this example the back portion 41. The clamp 10 comprises a pair of feet 11 which are fixed to the mounting surface. For example, the feet 11 may be welded to the mounting surface 3; or may be fixed using bolts, screws, rivets or the like (not shown). A leg 12 projects from each foot 11; and a body 13 extends substantially parallel to the mounting surface between the legs 12.

An aperture 4, substantially corresponding to the shape of the outlet end 32 is provided in the mounting surface 3, as is best shown in Figure 2c. When the loudspeaker 2 is mounted, the aperture 4 is aligned with the outlet end 32 of the air duct 30. To facilitate this, the clamp 10 is displaced from the aperture 4. In particular, this displacement is in a direction corresponding to where the back flange portion 41 would be positioned when the loudspeaker 2 is mounted with the aperture 4 and outlet end 32 in alignment.

In order to mount the loudspeaker 2 on the mounting surface 3, the flange 40 is positioned over and slid across the mounting surface 3 until the back flange portion 41 is positioned under the body 13 of the clamp 10; and the aperture 4 is aligned with the outlet end 32 of the air duct 30. The loudspeaker 2 is then in correct alignment, and the clamp 10 is operable to retain the back flange portion 41 in position relative to the mounting surface 3. This avoids the need to facilitate tool access to the back flange portion 41, for instance if screws or bolts are required to secure the back flange portion 41.

Whilst use of the clamp 10 alone may be sufficient for secure mounting in some circumstances, the skilled man will appreciate that additional flange fixing means can be provided to increase security of the mounting arrangement 1. One such example of additional flange fixing means are bolts 19 shown in Figures 2a and 2b. Such bolts can be driven though corresponding bores provided in the flange 40, gasket 45 and mounting surface 3 as required. In the example shown, the bolts 19 are provided at the corners of the front flange portion 42. When fitting a loudspeaker 2, this space is typically relatively accessible to tools for driving the bolts, given that the front of the loudspeaker generally faces into interior space where the sound is to be provided; rather than towards an exterior panel.

Additionally shown in Figure 2a is an optional fixing tab 38 having a mounting bore 39 provided on the exterior of air duct 30. The mounting bore 39 is adapted to receive tab fixing means (not shown in Figure 2a) such as bolts, screws, rivets or the like. Accordingly, the tab fixing means enable the air duct 30 to be secured to another convenient mounting surface (not shown) by means of fixing tab 38. This additional mounting is particularly useful where the air duct 30 is extended for packaging reasons; but this optional tab feature is omitted from Figure 2b for clarity.

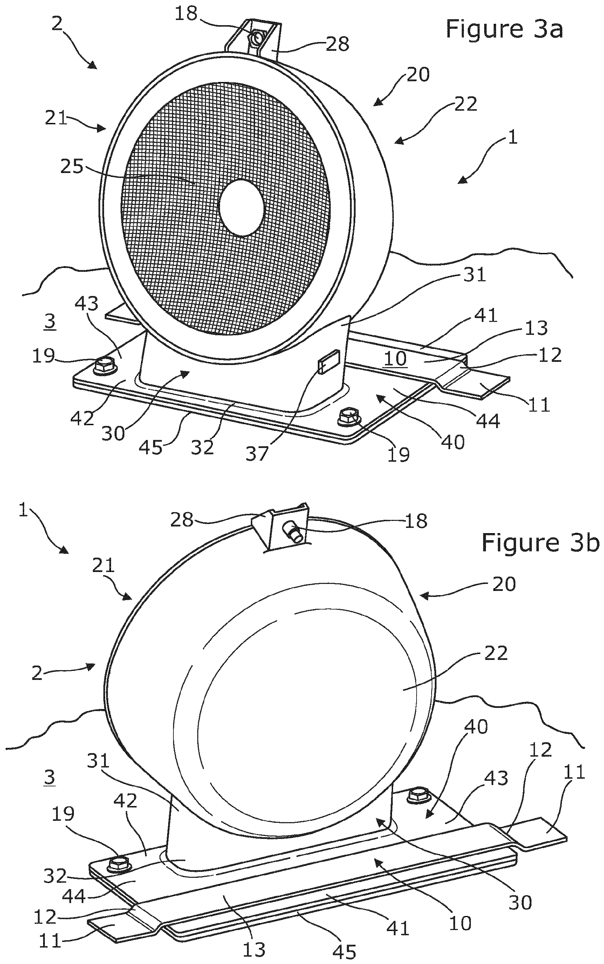

Turning now to Figures 3a and 3b, an alternative embodiment of the mounting arrangement 1 is shown. This embodiment differs from the first embodiment by the provision of a fixing tab 28 projecting from casing 20. As shown in the Figures, the fixing tab projects from an opposing side of the casing 20 to the air duct 30. The skilled person will however appreciate that in alternative embodiments, two or more such fixing tabs 28 may be provided; and/or that such a fixing tab or tabs 28 need not be directly opposite the air duct 30.

The fixing tab 28 is provided with a bore through which a fixing means such as a bolt 18 can be inserted to attach the fixing tab to a further mounting surface (not shown). This can increase the security of mounting of the loudspeaker 2, in the event that a further mounting surface is conveniently located.

Additionally shown in Figure 3a is an optional fixing tab in the form of a clip 37 provided on the exterior of air duct 30. Accordingly, this facilitates securing the air duct 30 to another convenient mounting surface (not shown) by means of clip 37. As with fixing tab 38 shown in Figure 2a, this additional mounting is particularly useful where air duct 30 is extended for packaging reasons. This optional clip feature is omitted from Figure 3b for clarity.

The one or more embodiments are described above by way of example only. Many variations are possible without departing from the scope of protection afforded by the appended claims.

## Claims

1. A mounting arrangement (1) for mounting a loudspeaker (2) to a mounting surface (3) wherein the loudspeaker is of the type comprising a casing (20) and an air duct (30) extending from the casing to an outlet end (32), and wherein a flange (40) is provided around the outlet end of the air duct (30); wherein the mounting arrangement (1) comprises a clamp (10) projecting from the mounting surface (3), the clamp being adapted to receive an edge portion (41) of the flange (40) and to retain it in position relative to the mounting surface (3); **characterized in that**:
the clamp (10) is attached to the surface via one or more feet (11); and **in that**:
the clamp (10) comprises a leg (12) projecting from each foot.

2. A mounting arrangement (1) as claimed in claim 1, wherein at an opposing end to the foot (11), each leg (12) is connected to a body (13) of the clamp (10), the body (13) extending substantially parallel to the mounting surface (3).

3. A mounting arrangement (1) as claimed in claim 1 or claim 2, wherein the mounting arrangement is provided with additional flange fixing means (19) on a different portion (42) of the flange (40) than that retained by the clamp (10).

4. A mounting arrangement (1) as claimed in claim 3, wherein the flange fixing means (19) are provided on a portion (42) of the flange (40) disposed on the opposing side of the air duct (30) to the edge portion (41) of the flange (40) retained by the clamp (10).

5. A mounting arrangement (1) as claimed in claim 3 or claim 4, wherein the flange (40) and the mounting surface (3) each comprises one or more bores adapted to receive the flange fixing means (19).

6. A mounting arrangement (1) as claimed in any preceding claim, wherein the outlet end (32) of the air duct (30) comprises an air outlet; and the flange (40) is provided around the air outlet.

7. A mounting arrangement (1) as claimed in claim 6, wherein the mounting surface (3) comprises an aperture (4), the aperture corresponding in shape to the air outlet.

8. A mounting arrangement (1) as claimed in any preceding claim, wherein a gasket (45) is provided between the flange (40) and the mounting surface (3).

9. A mounting arrangement (1) as claimed in any preceding claim, wherein the clamp (10) is adapted to grip the flange (40) by the provision of a suitable coating or suitable formations on a face of the clamp body (13) facing the mounting surface (3).

10. A mounting arrangement (1) as claimed in any preceding claim, wherein the clamp (10) is adapted to grip the flange (40) by selection of the leg (12) dimensions to correspond to the flange (40) thickness; or to the flange thickness and gasket (45) thickness combined.

11. A mounting arrangement (1) as claimed in any preceding claim, wherein the loudspeaker (2) is provided with one or more fixing tabs (28) projecting from the casing (20).

12. A mounting arrangement (1) as claimed in any preceding claim, wherein the loudspeaker (2) is provided with one or more fixing tabs (38) projecting from the air duct (30).

13. A mounting arrangement (1) as claimed in claim 11 or claim 12, wherein one or more of the fixing tabs (28, 38) comprises a clip (37).

14. A mounting arrangement (1) as claimed in claim 11 or claim 12, wherein one or more of the fixing tabs (28, 38) comprises a mounting bore (39) for a tab fixing means (18).

15. A mounting arrangement (1) as claimed in any preceding claim, wherein the loudspeaker (2) is a vehicle loudspeaker; and the mounting surface (3) is a vehicle structure.

16. A vehicle comprising one or more loudspeakers (2) mounted within the vehicle by mounting arrangements (1) according to any one of claims 1 to 15.
